# EUROPEAN PATENT SPECIFICATION

(11) **EP 1 685 786 B1**
(45) Date of publication and mention of the grant of the patent: **20.01.2010**
(21) Application number: 03772354.1
(22) Date of filing: 14.11.2003
(51) Int. Cl.: A47L 15/42, D06F 39/12, B29C 44/00

(54) **TOP COVER FOR ELECTRIC HOUSEHOLD APPLIANCES AND PRODUCTION METHOD THEREOF**
OBERABDECKUNG FÜR ELEKTRISCHE HAUSGERÄTE UND HERSTELLUNGSVERFAHREN DAFÜR
COUVERCLE SUPERIEUR DESTINE A DES APPAREILS ELECTROMENAGERS ET PROCEDE DE FABRICATION CORRESPONDANT

(43) Date of publication of application: 02.08.2006
(73) Proprietor: Mondragon Soluciones, S.L.U., 46550 Albuixech (ES)
(72) Inventor: VIVES CLAVEL, Juan, parcela 5, 46550 Albuixech (Valencia) (ES)
(74) Representative: Carpintero Lopez, Francisco
(86) International application number: PCT/ES2003/000577
(87) International publication number: WO 2005/046421

(56) References cited:
- EP-A1- 0 680 712
- EP-A2- 0 080 770
- EP-A2- 0 114 582
- EP-A2- 0 180 223
- EP-A2- 1 081 268
- DE-A1- 19 514 821
- DE-U1- 29 505 295
- DE-U1- 29 812 911
- ES-B1- 2 170 693
- ES-B1- 2 170 695
- ES-B1- 2 170 696
- ES-T3- 2 041 262
- ES-T3- 2 178 148
- ES-U- 1 053 016
- GB-A- 1 536 089
- JP-A- 10 127 553

## Description

### OBJECT OF THE INVENTION

The object of the present invention consists of an improved top cover for household electrical appliances which incorporates as advantages the fact of being of simple manufacture and low cost, not only because of the materials used but also due to the procedure used in its execution. These covers are made with a low mechanical performance plastic panel or board, such as recycled plastic, which has its outer face finished with a bonded sheet of melamine and which is provided perimetrally with a high performance plastic frame attached to this panel or board.

The invention also refers to the process for the manufacture of the above-mentioned top covers for household electrical appliances, not only for making the plastic panel or board, which is the base of the cover, but also for the bonding of the sheet of melamine to the afore-mentioned panel and the attachment of the outer perimeter frame to the aforesaid plastic panel or board.

A household electrical appliance, be it a washing machine, dishwasher, dryer, refrigerator, etc. which uses a top cover like that shown in the present invention is also the object of the invention.
While conserving the structural dimensions of household electrical appliances and without affecting their outer measurements, the morphology or structure of said panel achieves a hollow space below the cover for use for a wide variety of services of the actual household electrical appliance.

### BACKGROUND OF THE INVENTION

In the prior art the covers for household electrical appliances, such as washing machines, dishwashers, dryers or the like, are made with a particleboard panel covered with a sheet of melamine and glued to a moulded plastic embellisher frame.

This particleboard panel may be interposed between two sheets, one upper and the other lower, in sandwich form, thereby achieving a structure of considerable strength.

Covers of this type have as advantages the high strength achieved by the inclusion of a particleboard panel, which endows it with high strength that is greater the thicker this panel is. The price of this panel is maintained at reasonable levels, as particleboard is not overly expensive, although the main problem associated with such board lies in the fact that, being made of wood, it has high hygroscopic capacity, which causes the swelling of the wood and the final destruction of the panel. If we add to all this the fact that this panel is intended for fitting on household electrical appliances in the working of which water and moisture predominate, it may be clearly deduced that these covers may deteriorate in a short period of time.

In the attempt to overcome these problems the need arose to make these covers with plastic materials, either by themselves or by means of coverings for the typical particleboard panels. These first panels, i.e. those made with plastic materials had the problem of their low strength, which led to the belief that the household electrical appliances on which these covers were fitted were low range appliances, owing to the fact that these covers had a tendency to break, or if they did not break, they got out of shape very easily, giving the household electrical appliance an appearance of fragility.

Going back again to the covers made with particleboard, these panels were covered with sheets of melamine which waterproofed the operating surface of the household electrical appliance. The system of covering the panels of particleboard proved suitable on account of its strength, but if we wanted to waterproof the cover completely, the end result was a more expensive product for the type of piece that was wanted for fitting on household electrical appliances, as generally speaking the covers are merely decorative panels and are not elements that have a direct effect on their operating capability.

An advantageous solution to these difficulties may be found in Spanish patent ES-2,167,249 referring to a cover for household electrical appliances which is provided with braces taking the form of strips perpendicular to the plane of the cover and which are supported on its inner face by means of a right-angle lip, said strips being covered with plastic which is terminated laterally in brackets. Despite being a sturdy structure, when subjected to high loads it undergoes permanent plastic deformations and, furthermore, it is not a product that can be easily recycled due to that combination of plastic and metal stemming from the strips and the actual material forming the cover.

As improvements to this invention we find the Spanish certificates of addition to that same patent consisting of ES-2,170,693, ES-2,170,694, ES-2,170,695 and ES-2,170,695, in which more detailed attention is devoted to what is the union between the plastic panel or board and the piece that forms the frame of that cover, with the adoption of different more or less advantageous structures of covers and frames joined together.

We already know Spanish patent application by the same applicant with number P200102871, relating to a softener dispensing compartment for household electrical appliances that is built into the actual top cover of the appliance, a cover which is more highly regarded for the location of said dispensing compartment than for obtaining a structurally strong cover.

We know Spanish patent application P200200406, also by the same applicant, relating to a cover for household electrical appliances that has a built-in electronic control of the actual appliance itself. In respect of this invention, the same arguments apply as in the previous case, since the inclusion of the electronic control in the cover is what is valued more highly, rather than the execution of a structurally strong cover for said application.

Similarly known is Spanish patent application P200202342 relating to the fastening to one another of the elements making up the cover, such as an inverted cup and the frame surrounding said cup. This is a mechanical union and has no effect on the construction of a structurally strong cover for household electrical appliances.

### DESCRIPTION OF THE INVENTION

It is a purpose of the invention to achieve a cover for household electrical appliances of very economical cost, similar to the cost that may represent a cover formed of a particleboard body, with a quality finish and with strength on a par with covers of that type or even superior.

It is a purpose of this invention to achieve a cover which may be adapted to household electrical appliances and which, while maintaining the structural dimensions of same, will achieve a hollow space below it where multiple accessories or elements of the actual working of the household electrical appliance may be installed.
It is a purpose of the invention to achieve a cover whose level of finish is on a par with that of other state-of-the-art covers using higher quality materials.

A further purpose of the invention is an injection or moulding procedure for household electrical appliances, whereby the finish of the covers is successfully improved and a cover is produced that is economical both for the materials used and for the procedure chosen in its manufacture.

It is also a final purpose of the invention to achieve a household electrical appliance that incorporates a reasonably priced top cover of high mechanical strength which will house the control elements and accessories of the household electrical appliance necessary for its correct working.

To achieve a cover like that of the present invention, it has been decided to use recycled low mechanical performance plastics in order that said material used may not have an impact on the material cost of the cover.

Similarly, for the execution of the panel or board with which the cover is formed, it is planned not to include reinforcement strips, so that the strength is maintained, despite not incorporating such bracing elements, and the possible deformations after being subjected to loads are smaller, simply on account of the actual elasticity of the plastic material. It is a purpose of the invention to use only low mechanical performance recycled plastics for the execution of the panel or board, so that this cover is converted into a totally recyclable material when the household electrical appliance has concluded its useful life, assisting as far as possible the recovery of these types of recyclable materials and even, from a standpoint of environmental awareness, eliminate the conventional particleboard panel, thereby reducing the felling of trees.

It is therefore a purpose of the invention to achieve a cover for household electrical appliances in which its chief element, as is the panel or board, does not include such reinforcing elements as strips or the like and which, in turn, is executed with a recycled low mechanical performance plastic which may be recyclable. In order to achieve a cover with a high-strength mechanical performance with no reinforcing elements incorporated in it, surprisingly enough, using lattice ribs, the interior execution of the panel or board has enabled the strength of the aforesaid cover to be raised to levels on a par with or even superior to those of a traditional particleboard panel.

These ribs are only employed on the inner face of the aforesaid cover, as they remain concealed in a normal view of household electrical appliance, and they consist of solid low height ribs adjacent to one another, forming a lattice transverse to that of the axis of the actual cover, said lattice of ribs close to one another being combined with a second set of similarly solid ribs of greater height parallel to the side walls of the cover, therefore forming an angle different from the right angle with the above-mentioned small, closer-together ribs. These larger-sized ribs, of greater height but fewer in number than the short ribs, successfully define the empty areas where the control elements for the actual household electrical appliance may be housed.

This double lattice formed of a smaller number of higher ribs, parallel to the edges of the cover, combined with a second group of ribs closer to one another and of lower height which form an angle different from the right angle with the side edges of the cover, succeed in producing a high strength cover on a par with those executed with a particleboard panel. The resistance is high both to isolated deformation stresses on the surface of the cover and to lateral or buckling stresses of the cover itself, due to the fact that the combination of the inclined ribs parallel to the sides successfully absorb the stresses to which said covers may be subjected in a highly effective way.

Surprisingly enough, with this embodiment high mechanical strength has been achieved with a material of low or poor mechanical properties, due to the fact that the lattice formed of the solid ribs of greater height divides the cover proper into small areas and in each one of these small areas the strength is conferred by the lattice of closer ribs of lower height, forming thereby individual areas below the cover with an extensive space liberated which may be used in the household electrical appliance for housing such different elements as soap or detergent dispensers, rinse aid dispensers, and even for including the electronics associated with the actual household electrical appliance, while the cover may even be made to offer easy access so that the actual elements of the appliance can be installed there and maintenance may be carried out by simply removing the cover.

To improve the appearance of the cover, the recycled plastic panel or board is provided with a perimeter plastic frame of higher mechanical performance which may be joined to the moulded cover by means of multiple procedures, either by a mechanical joint, such as by clipping the side edges, or through a union of chemical adhesives or else with a welded union, which, for joining these plastics, may be executed by ultrasound welding, a technique that has proved to be a reliable and clean method for joining plastic pieces.

This perimeter frame, superimposed on the actual recycled plastic panel or board and joined in sandwich form, endows the cover with enhanced strength properties at such a critical point as the edges of the cover, edges which may be exposed regularly to knocks or impacts that could break a part or the whole of the cover.

To achieve a surface finish in keeping with the intentions of the household electrical appliance manufacturer and thus not depend on the finish of recycled plastic, the actual cover board or panel is covered with a sheet of melamine. The adhesives that may be used include both hot and cold bonding glues, or else reactive adhesives may be used. This sheet of melamine serves a dual purpose through on the one hand being the decorative finish panel for the cover and, on the other, reinforcing even more the strong cover itself, whereby we obtain a structure highly resistant to stresses and impacts in any direction.

The cover moulding procedure that is the object of the invention is a moulding or injection procedure by the physical foaming of thermoplastics, in which a foaming agent, such as Nitrogen (N2) or carbon dioxide (CO2) may be introduced into the thermoplastic at the time of injection in the mould. This procedure secures a microcellular structure of the thermoplastic whose most important advantage is based on reducing the material used in the manufacture of the cover and therefore its weight, as the plastic that is forming the reticulate structure traps air in the form of microbubbles, lowering the plastic content of the embodiment. The advantages in the finished piece are centred on the reduction of the internal stresses created in the actual material, the existence of less warping and deformation of the piece, improved planeness and elimination of shrink holes. This procedure complies with improved foamed material filling conditions in areas of fine thickness, which assists the formation of the resisting structure of the cover of the invention.

On the other hand, the disadvantages in the piece have to be taken into account, as elements made in this way offer a surface that is not attractive visually speaking, as it displays large grooves, the mechanical properties of the finished piece are also impaired, so, if we want proper strength, the cover of the invention, or rather the panel or board, has to be provided with bracing and resisting elements that form part of the features included in the object of the invention.

By virtue of a versatile mould using inserts, the thermoplastic foaming procedure used enables the piece to be formed by exchanging inserts, which mainly incorporate the elements and supports anchoring it to the frame of the household electrical appliance, so as to thereby obtain the different conformations of the cover. These inserts form in negative the relief of the shape of the cover to be filled with the thermoplastic, constituting the final configuration of the moulding.

In this procedure lattice rib areas may be eradicated if necessary in order to be able to include in this area devices belonging to the actual household electrical appliance, such as for instance electrical devices, counterweights, dispensing compartments for softeners, washing soaps, etc...

The procedure for manufacturing the cover continues with the injection of the perimeter frame to the cover by conventional injection procedures.

We then feed the panel into the gluing machine or melamine bonding machine, in the event of using sheets of melamine, said machine being composed of a roller train which will first of all provide the panel or board, including the reinforcements, with the necessary amount of glue or reactive adhesive required.

The so-called sandwich stage then takes place, consisting of attaching the sheet of melamine to the panel or board proper by means of a systems of rollers or rolls, such as a calender or vertical press, depending on the process chosen and as appropriate, obtaining a high-rate flexible, versatile bonded or glued joint and a fully handleable board ready for the fitting of the corresponding perimeter frame.

Once the cover has been made and is in these conditions of execution, it may be machined, a process by means of which it is cut, edged or machined in accordance with the household electrical appliance where it is to be installed, being adapted to the appropriate dimensions, both in its curves and in the sizing of the supports, etc., according to the customer's requirements.

For the installation of the supports there are different alternatives by means of which the perimeter frame is integrated on the finished board or panel.

One of the possible procedures is based on overinjection or overmoulding of the perimeter frame to the board or panel which it encircles round the edges. For this purpose, once the panel or board has the sheet of melamine glued, it is inserted into the frame injection mould, overinjecting the perimeter frame on the recycled plastic board or panel, no subsequent stages being needed to finish the cover, as the level of finish is that of the end product.

A second procedure used is based on a mechanical union of the perimeter frame to the panel with the resultant gluing or bonding of same. This gluing is supplemented with a clipping of both pieces, said procedure being performed at a cold or hot pressing station. Said pressing is carried out by vertical movement of a punch carrier plate, said punches being positioned strategically in the areas where the two parts have to be clipped together, i.e. between the perimeter frame and the board or panel.

A third procedure for joining the perimeter frame and board or panel together is carried out without clipping means, merely by applying a bead of reactive adhesive to the panel surround or frame for the adhesion of the two pieces by simple contact without the need for use of clipping means.

A fourth procedure used is based on ultrasound welding between the perimeter frame and the board or panel, for which purpose the procedure is based on the superimposing of the perimeter frame on the periphery of the board or panel and then applying to it by ultrasound a bead of weld which runs round the upper or outer face of the panel between the edge of same and the inner face of the superimposed part of the perimeter frame, so that the panel is covered with the sheet of melamine bonded with reactive glue to the upper face of the plane of the cover.

A fifth but not final procedure is executed by means of overmoulding, with the application of a decorated thermoformed film, as no frame strictly speaking has to be applied since it is replaced by the actual film.

Due to the multicellular structure, the cover made in this way has exceptional qualities that reduce the vibrations produced in the actual household electrical appliance, besides lowering its noise level, as the structure of the panel significantly dampens both the noise and the vibration transmitted from the household electrical appliance, thus preventing such noise and vibration issuing to the exterior, so that they are imperceptible by the user.

This procedure saves many manufacturing costs, as, besides the actual board or panel injection time, the elements and supports anchoring the cover to the frame of the household electrical appliance are installed in such a way in the mould during the panel forming process so that these elements are integrated with the finished board or panel and thus save subsequent installation operations, as happens with particleboard panels, where the anchorages are fastened to the board.

It is lastly an object of the invention to achieve a household electrical appliance, as may be the case of a washing machine, dishwasher, dryer, etc., which includes a top cover similar to that described and manufactured by a procedure also similar to that described.

### DESCRIPTION OF THE FIGURES

To supplement the present description, we present as an element illustrative but in no way limitative of the invention the following figures explanatory of the invention:
Figure 1 represents a view of the board or panel of the object of the invention showing clearly its exterior visible face.
Figure 2 represents a view similar to that of figure 1 but showing the rear face of the board or panel, where we may observe the details of the inner reinforcement that is the object of the invention.
Figure 3 shows a more detailed close-up of the inner ribs reinforcing the panel.
Figure 4 shows a more general view of the board or panel from its lower face where we may see the anchoring and supporting elements inserted in it.
Figure 5 represents a cross-sectional close-up of the union between the board or panel and the perimeter frame, said union procedure being carried out by means of overmoulding of the frame on the edges of the board or panel.
Figure 6 represents a cross-sectional close-up of the union between board or panel and the perimeter frame, said union procedure being carried out by means of gluing the frame onto the edges of the board or panel.
Figure 7 represents a cross-sectional close-up of the union between the board or panel and the perimeter frame, said union procedure being carried out by means of the ultrasound welding of the frame onto the edges of the board or panel.
Figure 8 represents a cross-sectional close-up of the board or panel, said forming procedure being carried out by means of a thermoformed decorative film.
Figure 9 represents a perspective view of the recycled plastic panel or board, to which the perimeter frame is joined so as to form the household electrical appliance cover assembly that is the object of the invention.

### DESCRIPTION OF A PREFERRED MODE OF EMBODIMENT

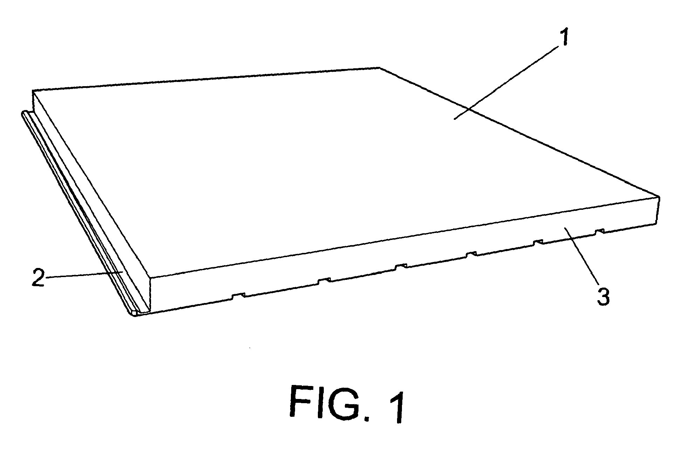

Figure 1 shows a view of the panel or board which will form the cover of the invention (1), there being shown in this representation the outer or visible face of the afore-mentioned panel. On its outer face this panel is smooth and from its side walls there project wings (2) and (3) which will make up, with their counterparts and the surface of the panel, the form of the board or panel composing the cover proposed by the invention, which has the form of an inverted cup.

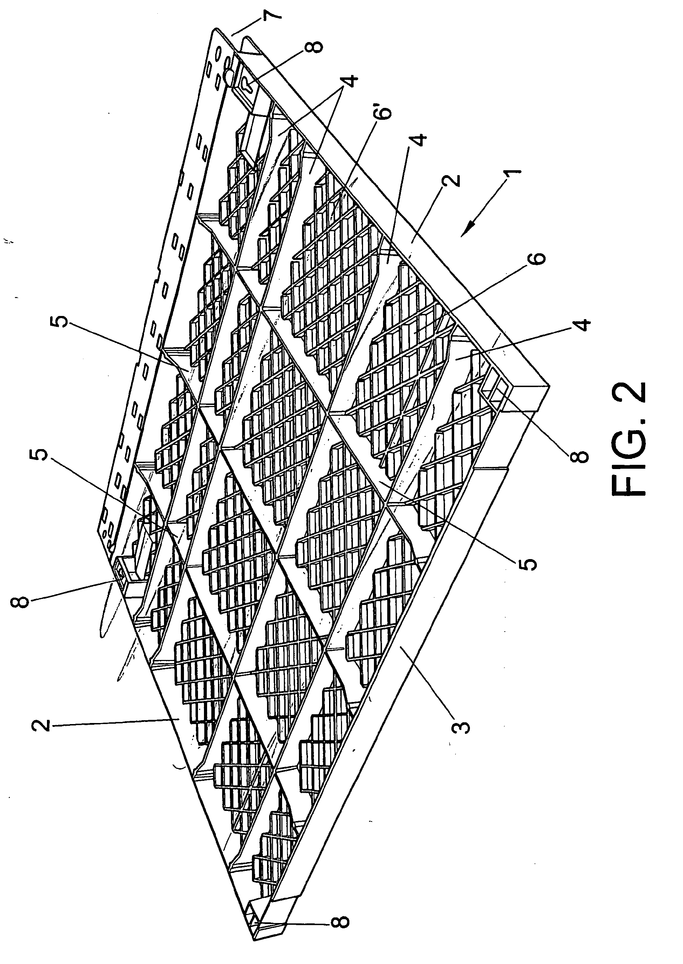

In Figure 2 we may observe clearly the board or panel (1) in which initially there stands out a lattice of solid ribs (6) forming a non-orthogonal angle with the side walls (2) and (3). This framework of ribs enables us to appreciate that these ribs are of low height and certainly close to one another, which has an effect on the strength of the panel or board (1). These ribs, very close together, are combined with ribs (4) and (5) parallel to the edges of the panel, which are also solid but of greater height. Together with the sides (2) and (3), these ribs (4), (5) form plain areas where the strength lies in the smaller ribs situated in their interior. In the rear part we observe the end finish (7), adapted to the actual morphology of the household electrical appliance, which the manufacturer gives it for its adaptation to the appliance.

The corners of the panel or board contain the hooks and elements and supports (8) anchoring the panel or board to the frame of the household electrical appliance, executed in the actual injection of the thermoplastic.

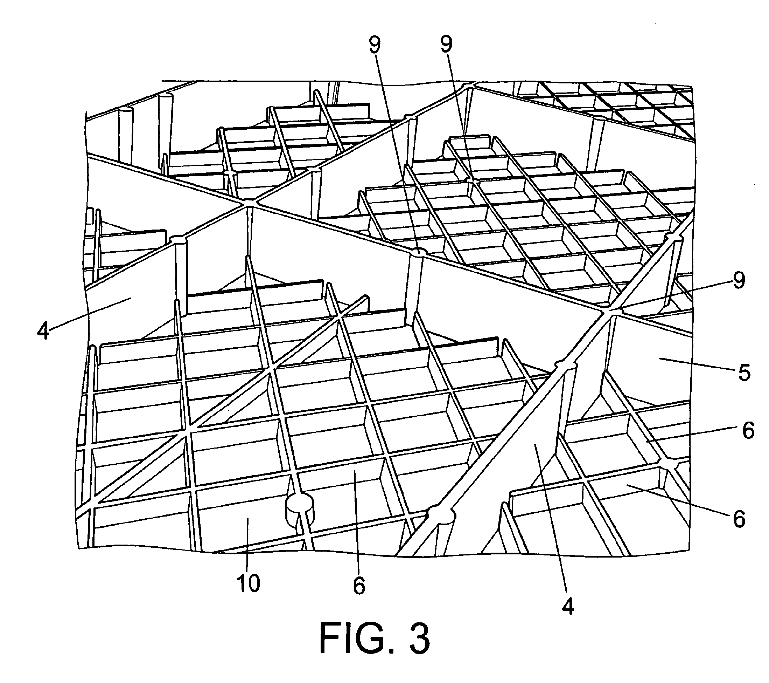

Figure 3 shows a more detailed view of the inner lattice of the panel or board, made up of a lattice of ribs (6), very close to one another and angled in relation to the side walls of the actual panel, followed by ribs of greater height (4) and (5). A series of reinforced areas (9) are executed, both in the areas relating to the higher ribs and in respect of the smaller ribs, utilised for the support of the ejectors after the panel or board (1) injection process.

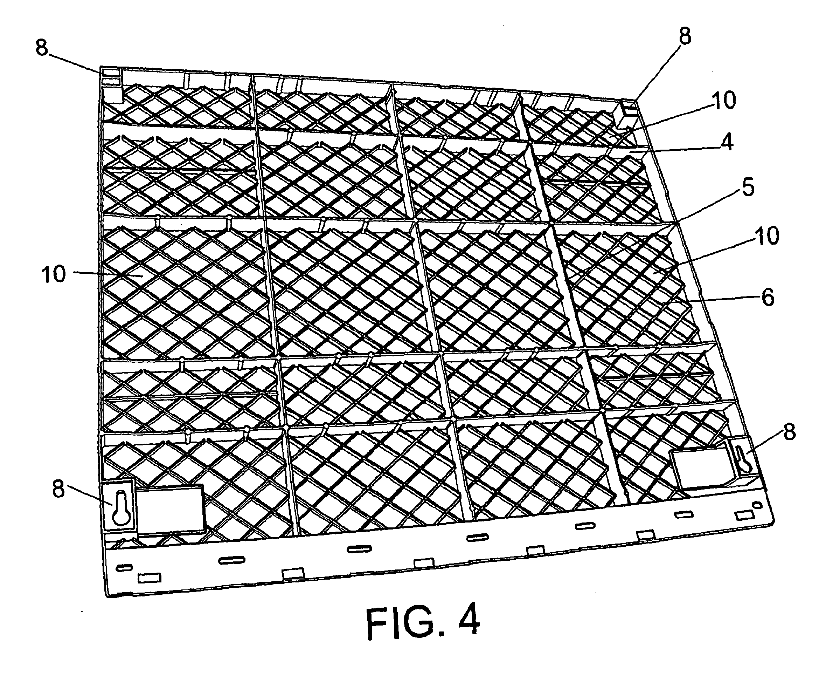

Figure 4 sets out to show various structural details of the cover of the invention, as is the case first of all of the cavities (10) into which the panel is divided, defined by more prominent ribs (4) and (5) between which slots or undercut areas are formed, defined in height by the lattice of ribs of lower height (6). These cavities form areas that may house the different services or elements of the household electrical appliance, such as the compartment containing soap, softener, and even the electronics of the appliance, so that these elements are more accessible for handling or maintenance. In the four corners we may observe the elements and supports (8) anchoring the cover to the household electrical appliance, which, as stated previously, will be adapted to the type of fastening that each manufacturer may wish to include.

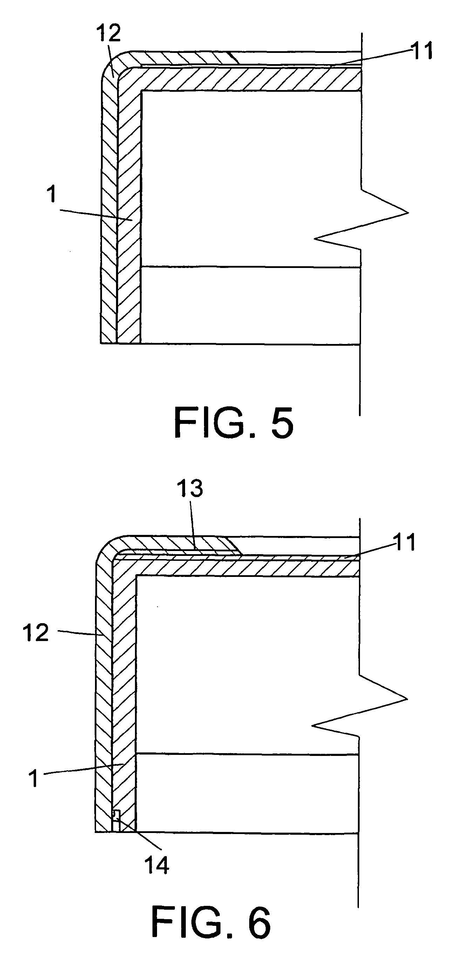

Figures 5 to 8 show cross-sectional details of the edges of the cover for household electrical appliances and how the union is effected between the panel or board (1), sheet of melamine (11) and outer perimeter frame (12). Thus, figure 5 shows how the outer perimeter frame (12) is overmoulded on the panel or board (1), to which the sheet of melamine (11) has been bonded beforehand. The outer area of the cover is visible superiorly and from the exterior, being formed of the overmoulded perimeter frame and the sheet of melamine, which is glued onto the panel or board (1), thereby endowing the product with a finish appearance of exceptional quality.

Figure 6 represents the version in which the outer perimeter frame (12) is a separate piece which is secured to the outer edges of the board or panel (1). It is attached by means of the incorporation of adhesive (13) and by means of optional clipping at its opposite end between the two elements all along the union between the panel or board and the perimeter frame, a strong union being achieved between both elements in a way that is extremely simple to execute.

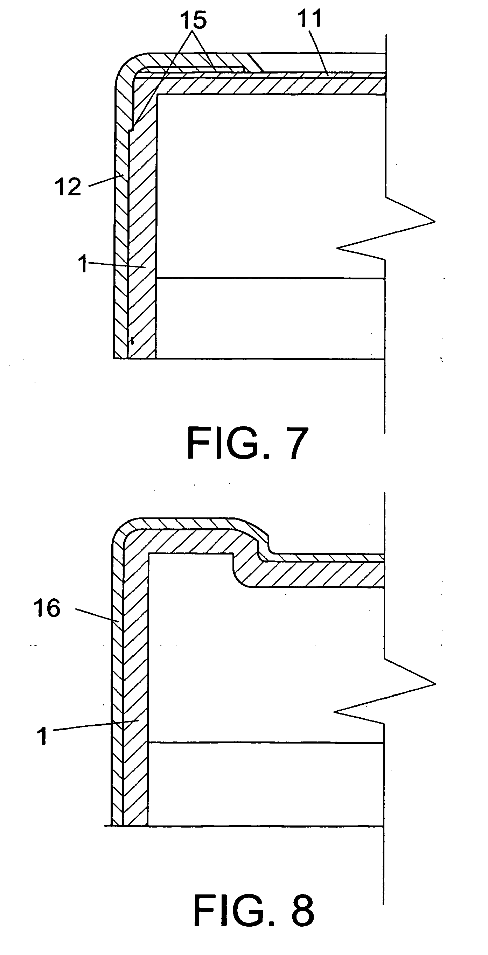

Figure 7 represents a version very similar to that of the previous figure, in which the perimeter frame (12) is a separate body that is fastened to the edges of the board or panel (1) and both are ultrasound welded along an area of union (15), so that both bodies are joined inseparably.

Figure 8 represents a different option in which the board or panel (1) is provided externally with a decorative film (16) that covers the whole panel, offering a small thickness added to the board and which will be the exteriorly visible area of the cover that is the object of the invention. This decorative film is produced by means of the overmoulding technique, which assures a perfect union between the base and said film.

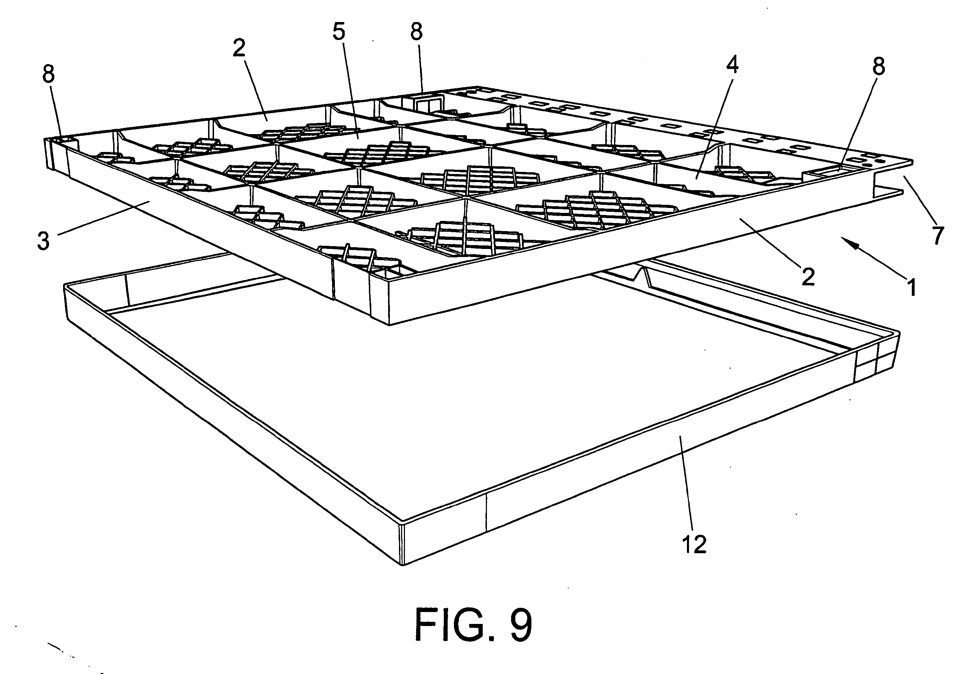

Lastly, figure 9 represents an exploded perspective view of the board or panel (1), wherein we may observe the ribs mentioned in the initially described figures and how this board would be coupled to the perimeter frame (12) in order to form the single body referred to as the cover, which is the object of the invention. In this figure we may easily appreciate that the clipping would be done by means of the deformation of the edges of the frame onto the side edges of the board or panel (1), thereby producing a strong union between both elements, which may even be glued with adhesive.

## Claims

1. Top cover for household electrical appliances comprising:
- a board or panel (1) executed with a low mechanical performance plastic;
- a sheet of melamine bonded to said board of panel (1) by means of gluing;
- a perimeter frame (12) attached to the perimeter edge of said board or panel (1); and
- reinforcements consisting of a lattice of solid ribs (6) of low height moulded in one part with the inner face of said board of panel (1) and made from the same material as the board or panel (1), said solid ribs (6) leaving a large cavity between their outer edge and the inner body of the household electrical appliance,
**characterized in that** the board or panel (1) additionally comprises ribs (4) and (5) formed of a series of partitions perpendicular to the surface of the actual panel or board (1) and being of greater height than the solid ribs (6) wherein said ribs (4) and (5) form cavities (10) defined in height by said solid ribs (6) where the control and power supply elements of the household electrical appliance may be housed.

2. Top cover for household electrical appliances according to claim 1, **characterised in that** the second set of ribs (4) and (5) run in a direction parallel and perpendicular to the side walls.

3. Top cover for household electrical appliances according to claim 1, **characterised in that** the second set of ribs (4) and (5) run in a direction neither parallel nor perpendicular to the side walls.

4. Top cover for household electrical appliances according to claim 1, **characterised in that** the lattice of solid ribs (6) is executed forming a non-orthogonal angle with the walls of the panel or board (1).

5. Top cover for household electrical appliances, according to claim 1, **characterised in that** the lattice of solid ribs (6) is executed forming an orthogonal angle with the walls of the panel or board (1).

6. Top cover for household electrical appliances according to any of the claims 1 to 3, **characterised in that** the ribs (4) and (5) are executed forming an orthogonal angle with the walls of the panel or board (1).

7. Top cover for household electrical appliances, according to any of the claims 1 to 3, **characterised in that** the ribs (4) and (5) are executed forming a non-orthogonal angle with the walls of the panel or board (1).

8. Top cover for household electrical appliances according to the preceding claims, **characterised in that** the sheet of melamine (11) is bonded to the upper surface of the panel or board (1).

9. Top cover for household electrical appliances according to any of the claims 1 to 8, **characterised in that** the board or panel (1) is made from recycled plastic.

10. Top cover for household electrical appliances according to claim 9, **characterised in that** the material used in the manufacture of the panel or board (1) is a recycled thermoplastic of a microcellular reticulate structure.

11. Top cover for household electrical appliances comprising:
- a board or panel (1) executed with a low mechanical performance plastic;
- a decorative film (16) overmoulded on said board or panel (1); and
- reinforcements consisting of a lattice of solid ribs (6) of low height moulded in one part with the inner face of said board of panel (1) and made from the same material as the board or panel (1), said solid ribs (6) leaving a large cavity between their outer edge and the inner body of the household electrical appliance,
**characterized in that** the board or panel (1) additionally comprises ribs (4) and (5) formed of a series of partitions perpendicular to the surface of the actual panel or board (1) and being of greater height than the solid ribs (6) wherein said ribs (4) and (5) form cavities (10) defined in height by said solid ribs (6) where the control and power supply elements of the household electrical appliance may be housed.

12. Procedure for the manufacture of top covers for household electrical appliances according to claim 1, **characterised in that** it comprises the steps of:
- moulding or injection of the upper panel or board (1) by physical foaming of low mechanical strength thermoplastics incorporating the elements and supports for anchoring said panel or board (1) to the frame of the household appliance;
- attaching the sheet of melamine (11) to the panel or board (1) by bonding;
- machining said panel or board (1) with the sheet of melamine (11) attached thereto in accordance with the household electrical appliance where it is to be installed and the customer's requirements; and
- union of a perimeter frame (12) to the machining panel or board (1) with the sheet of melamine (11).

13. Procedure for the manufacture of top covers for household electrical appliances according to claim 12, **characterised in that** at the time of injection of the upper panel or board (1) into the mould a foaming agent is introduced into the thermoplastic to obtain a microcellular reticulate structure.

14. Procedure for the manufacture of top covers for household electrical appliances according to claim 13, **characterised in that** the foaming is nitrogen (N2) or carbon dioxide (CO2).

15. Procedure for the manufacture of top covers for household electrical appliances according to claim 12, **characterised in that** the union between the panel or board (1) and the perimeter frame (12) is effected by means of adhesive and, optionally, by means of clipping the edges of both pieces.

16. Procedure for the manufacture of top covers for household electrical appliances according to claim 12, **characterised in that** the union between the panel or board (1) and the perimeter frame (12) is effected by means of overmoulding the perimeter frame (12) onto the panel or board (1).

17. Procedure for the manufacture of top covers for household electrical appliances according to claim 12, **characterised in that** the union between the panel or board (1) and the perimeter frame (12) is effected by means of ultrasound welding.

18. Procedure for the manufacture of top covers for household electrical appliances, according to claim 1 or 11, **characterised in that** it comprises the steps of:
- moulding or injection of the upper panel or board (1) by physical foaming of low mechanical strength thermoplastics incorporating the elements and supports for anchoring said panel or board (1) to the frame of the household appliance;
- attaching the sheet of melamine (11) to the panel or board (1) by bonding;
- machining said panel or board (1) with the sheet of melamine (11) attached thereto in accordance with the household electrical appliance where it is to be installed and the customer's requirements; and
- overmoulding of a decorative film (16) to the machining panel or board (1) bounded with the sheet of melamine (11).

19. Household electrical appliance incorporating a top cover as claimed in claims 1 to 10 or 11.

20. Household electrical appliance incorporating a top cover executed by a procedure as claimed in claims 12 to 17 or 18.

## Patentansprüche

1. Obere Abdeckung für elektrische Haushaltsgeräte, mit:
- einer Platte oder Tafel (1), die aus einem Kunststoff von geringer mechanischer Festigkeit gebildet ist,
- einer durch Kleben haftend auf der Platte oder Tafel (1) angebrachten Melaminbahn,
- einem Umfangsrahmen (12), der am Umfangsrand der Platte oder Tafel (1) angebracht ist; und
- Verstärkungen, die aus einem Gitter massiver Rippen (6) geringer Höhe bestehen, welche einstückig mit der Innenseite der Platte oder Tafel (1) geformt sind und aus dem gleichen Material wie die Platte oder Tafel (1) gebildet sind, wobei die massiven Rippen (6) einen großen Hohlraum zwischen ihrem Außenrand und dem Innenkörper des elektrischen Haushaltsgeräts belassen, **dadurch gekennzeichnet, dass** die Platte oder Tafel (1) zusätzlich Rippen (4) und (5) aufweist, welche durch eine Reihe von senkrecht zur Oberfläche der eigentlichen Platte oder Tafel (1) verlaufenden Trennwänden gebildet sind und höher als die massiven Rippen (6) sind, wobei die Rippen (4) und (5) in der Höhe durch die massiven Rippen (6) begrenzte Hohlräume (10) bilden, in welchen die Steuer- und Energieversorgungselemente des elektrischen Haushaltsgeräts untergebracht werden können.

2. Obere Abdeckung für elektrische Haushaltsgeräte nach Anspruch 1, **dadurch gekennzeichnet, dass** die zweite Gruppe von Rippen (4) und (5) sich parallel und senkrecht zu den Seitenwänden erstreckt.

3. Obere Abdeckung für elektrische Haushaltsgeräte nach Anspruch 1, **dadurch gekennzeichnet, dass** die zweite Gruppe von Rippen (4) und (5) weder parallel noch senkrecht zu den Seitenwänden verläuft.

4. Obere Abdeckung für elektrische Haushaltsgeräte nach Anspruch 1, **dadurch gekennzeichnet, dass** das Gitter der massiven Rippen (6) derart ausgebildet ist, dass es einen nicht orthogonalen Winkel mit den Wänden der Tafel oder Platte (1) bildet.

5. Obere Abdeckung für elektrische Haushaltsgeräte nach Anspruch 1, **dadurch gekennzeichnet, dass** das Gitter der massiven Rippen (6) derart ausgebildet ist, dass es einen orthogonalen Winkel mit den Wänden der Tafel oder Platte (1) bildet.

6. Obere Abdeckung für elektrische Haushaltsgeräte nach einem der Ansprüche 1 bis 3, **dadurch gekennzeichnet, dass** die Rippen (4) und (5) derart ausgebildet sind, dass sie einen orthogonalen Winkel mit den Wänden der Tafel oder Platte (1) bilden.

7. Obere Abdeckung für elektrische Haushaltsgeräte nach einem der Ansprüche 1 bis 3, **dadurch gekennzeichnet, dass** die Rippen (4) und (5) derart ausgebildet sind, dass sie einen nicht orthogonalen Winkel mit den Wänden der Tafel oder Platte (1) bilden.

8. Obere Abdeckung für elektrische Haushaltsgeräte nach einem der vorhergehenden Ansprüche, **dadurch gekennzeichnet, dass** die Melaminbahn (11) mit der Oberseite der Tafel oder Platte (1) verbondet ist.

9. Obere Abdeckung für elektrische Haushaltsgeräte nach einem der Ansprüche 1 bis 8, **dadurch gekennzeichnet, dass** die Platte oder Tafel (1) aus Recycling-Kunststoff hergestellt ist.

10. Obere Abdeckung für elektrische Haushaltsgeräte nach Anspruch 9, **dadurch gekennzeichnet, dass** das bei der Herstellung der Tafel oder Platte (1) verwendete Material ein recycelter Thermoplast mit einer mikrozellularen retikularen Struktur ist.

11. Obere Abdeckung für elektrische Haushaltsgeräte, mit:
- einer Platte oder Tafel (1), die aus einem Kunststoff mit geringen mechanischen Eigenschaften gebildet ist,
- einem um die Platte oder Tafel (1) geformten dekorativen Film (16), und
- Verstärkungen, die aus einem Gitter massiver Rippen (6) geringer Höhe bestehen, welche einstückig mit der Innenseite der Platte oder Tafel (1) geformt sind und aus dem gleichen Material wie die Platte oder Tafel (1) gebildet sind, wobei die massiven Rippen (6) einen großen Hohlraum zwischen ihrem Außenrand und dem Innenkörper des elektrischen Haushaltsgeräts belassen, **dadurch gekennzeichnet, dass** die Platte oder Tafel (1) zusätzlich Rippen (4) und (5) aufweist, welche durch eine Reihe von senkrecht zur Oberfläche der eigentlichen Platte oder Tafel (1) verlaufenden Trennwänden gebildet sind und höher als die massiven Rippen (6) sind, wobei die Rippen (4) und (5) in der Höhe durch die massiven Rippen (6) begrenzte Hohlräume (10) bilden, in welchen die Steuer- und Energieversorgungselemente des elektrischen Haushaltsgeräts untergebracht werden können.

12. Verfahren zur Herstellung von oberen Abdeckungen für elektrische Haushaltsgeräte nach Anspruch 1, **dadurch gekennzeichnet, dass** es die folgenden Schritte aufweist:
- Formen oder Spritzgießen der oberen Tafel oder Platte (1) durch physikalisches Schäumen von Thermoplasten von geringer mechanischer Festigkeit, wobei die Elemente und Stützen zum Verankern der Tafel oder Platte (1) an dem Rahmen eines elektrischen Haushaltsgeräts mit eingeschlossen sind,
- Anbringen der Melaminbahn (11) an der Platte oder Tafel (1) durch Verbonden,
- Bearbeiten der Platte oder Tafel (1) mit der darauf angebrachten Melaminbahn (11) gemäß dem elektrischen Haushaltsgerät, an welchen sie angebracht werden soll, und den Anforderungen des Kunden, und
- Verbinden eines Umfangsrahmens (12) mit der bearbeiteten, die Melaminbahn (11) aufweisenden Platte oder Tafel (1).

13. Verfahren zur Herstellung von oberen Abdeckungen für elektrische Haushaltsgeräte nach Anspruch 12, **dadurch gekennzeichnet, dass** zum Zeitpunkt des Spritzens der oberen Tafel oder Platte (1) in die Form ein Schäummittel in das Thermoplast eingeleitet wird, um eine mikrozellulare retikulare Struktur zu erhalten.

14. Verfahren zur Herstellung von oberen Abdeckungen für elektrische Haushaltsgeräte nach Anspruch 13, **dadurch gekennzeichnet, dass** das Schäummittel Stickstoff (N₂) oder Kohlendioxid (CO₂) ist.

15. Verfahren zur Herstellung von oberen Abdeckungen für elektrische Haushaltsgeräte nach Anspruch 12, **dadurch gekennzeichnet, dass** das Verbinden der Tafel oder Platte (1) mit dem Umfangsrand (12) mittels Kleber und optional mittels einer Clipverbindung der Ränder beider Teile erfolgt.

16. Verfahren zur Herstellung von oberen Abdeckungen für elektrische Haushaltsgeräte nach Anspruch 12, **dadurch gekennzeichnet, dass** das Verbinden der Tafel oder Platte (1) mit dem Umfangsrand (12) durch Umspritzen der Tafel oder Platte (1) mit dem Umfangsrand (12) erfolgt.

17. Verfahren zur Herstellung von oberen Abdeckungen für elektrische Haushaltsgeräte nach Anspruch 12, **dadurch gekennzeichnet, dass** das Verbinden der Tafel oder Platte (1) mit dem Umfangsrand (12) durch Ultraschallschweißen erfolgt.

18. Verfahren zur Herstellung von oberen Abdeckungen für elektrische Haushaltsgeräte nach Anspruch 1 oder 11, **dadurch gekennzeichnet, dass** es die folgenden Schritte aufweist:
- Formen oder Spritzgießen der oberen Tafel oder Platte (1) durch physikalisches Schäumen von Thermoplasten von geringer mechanischer Festigkeit, wobei die Elemente und Stützen zum Verankern der Tafel oder Platte (1) an dem Rahmen eines elektrischen Haushaltsgeräts mit eingeschlossen sind,
- Anbringen der Melaminbahn (11) an der Platte oder Tafel (1) durch Verbonden,
- Bearbeiten der Platte oder Tafel (1) mit der darauf angebrachten Melaminbahn (11) gemäß dem elektrischen Haushaltsgerät, an welchen sie angebracht werden soll, und den Anforderungen des Kunden, und
- Formen eines dekorativen Films (16) um die bearbeitete, mit der Melaminbahn (11) verbondete Tafel oder Platte (1).

19. Elektrisches Haushaltsgerät mit einer oberen Abdeckung nach den Ansprüchen 1 bis 10 oder 11.

20. Elektrisches Haushaltsgerät mit einer oberen Abdeckung, die nach einem Verfahren gemäß den Ansprüchen 12 oder 13 bis 17 hegestellt ist.

## Revendications

1. Couvercle d'appareil électrique domestique comprenant :
- un panneau (1) réalisé en une matière plastique à faibles caractéristiques mécaniques,
- une feuille de mélamine collée au panneau (1),
- un châssis périphérique (12) fixé au bord périphérique du panneau (1), et
- des renforcements constitués par un réseau de nervures pleines (6) légères, moulées en une seule pièce avec la face intérieure du panneau (1) et réalisées dans la même matière que le panneau (1), les nervures pleines (6) laissant une grande cavité entre leurs bords extérieurs et le corps intérieur de l'équipement électrique domestique,
**caractérisé en ce que**
le panneau (1) comporte en outre des nervures (4, 5) formées d'une série de cloisons perpendiculaires à la surface du panneau (1) proprement dit et ayant une hauteur supérieure à celle des nervures pleines (6),
les nervures (4) et (5) formant des cavités (10) définies en hauteur par les nervures pleines (6) dans lesquelles on loge les éléments de commande et d'alimentation de l'appareil électrique domestique.

2. Couvercle d'appareil électrique domestique selon la revendication 1,
**caractérisé en ce que**
le second jeu de nervures (4) et (5) est dirigé dans une direction parallèle et perpendiculaire aux côtés latéraux.

3. Couvercle d'appareil électrique domestique selon la revendication 1,
**caractérisé en ce que**
le second ensemble de nervures (4) et (5) est dirigé dans une direction qui n'est, ni parallèle, ni perpendiculaire à celle des parois latérales.

4. Couvercle d'appareil électrique domestique selon la revendication 1,
**caractérisé en ce que**
le réseau de nervures pleines (6) est réalisé en formant un angle non-droit avec les parois du panneau ou de la plaque (1).

5. Couvercle d'appareil électrique domestique selon la revendication 1,
**caractérisé en ce que**
le réseau de nervures pleines (6) fait un angle droit avec les parois du panneau (1).

6. Couvercle d'appareil électrique domestique selon l'une des revendications 1 à 3,
**caractérisé en ce que**
les nervures (4) et (5) font un angle droit avec les parois du panneau (1).

7. Couvercle d'appareil électrique domestique selon l'une des revendications 1 à 3,
**caractérisé en ce que**
les nervures (4) et (5) font un angle non-droit avec les parois du panneau (1).

8. Couvercle d'appareil électrique domestique selon l'une des revendications précédentes,
**caractérisé en ce que**
la feuille de mélamine (11) est fixée à la surface supérieure du panneau (1).

9. Couvercle d'appareil électrique domestique selon l'une des revendications 1 à 8,
**caractérisé en ce que**
le panneau (1) est réalisé en matière plastique recyclée.

10. Couvercle d'appareil électrique domestique selon la revendication 9,
**caractérisé en ce que**
le matériau utilisé dans la fabrication de panneaux ou de plaques (1), est une matière thermoplastique recyclée à structure microcellulaire réticulée.

11. Couvercle d'appareil électrique domestique comprenant :
**caractérisé en ce que**
- un panneau (1) réalisé avec des caractéristiques mécaniques faibles,
- un film décoratif (16) est surmoulé sur la plaque (1), et
- des renforcements formés d'un réseau de nervures pleines (6) de faible hauteur, moulées en une seule pièce avec la surface intérieure du panneau (1) et de la même matière que le panneau (1), les nervures pleines (6) laissant une grande cavité entre leurs bords extérieurs et le corps intérieur de l'appareil électrique domestique,
**caractérisé en ce que**
le panneau (1) comporte en outre des nervures (4) et (5) de plus grand diamètre que les nervures pleines (6), les nervures (4) et (5) des cavités (10) étant définies en hauteur par les nervures pleines (6) pour loger les équipements de commande et d'alimentation en puissance de l'appareil électrique domestique.

12. Procédé de fabrication de couvercles d'appareils électriques domestiques selon la revendication 1,
**caractérisé en ce qu'**
il comprend les étapes suivantes :
- moulage ou injection du panneau supérieur (1) par expansion physique de matière thermoplastique à faible résistance mécanique, intégrant les éléments et supports pour accrocher le panneau (1) au châssis de l'appareil domestique,
- fixation de la feuille de mélamine (11) au panneau ou à la plaque (1) par liaison,
- usinage du panneau (1) avec la feuille de mélamine (11) fixée à celui-ci en fonction de l'appareil domestique électrique selon lequel il doit être installé et répondre aux exigences du fabricant, et
- réunion du châssis périphérique (12) au panneau d'usinage (1) avec la feuille de mélamine (11).

13. Procédé de fabrication de couvercles d'appareils électriques domestiques selon la revendication 12,
**caractérisé en ce qu'**
au moment de l'injection du panneau supérieur (1) dans le moule, on introduit un agent moussant dans la matière thermoplastique pour obtenir une structure réticulée microcellulaire.

14. Procédé de fabrication de couvercles d'appareils électriques domestiques selon la revendication 13,
**caractérisé en ce que**
la mousse on forme avec de l'azote (N2) ou du dioxyde de carbone (CO2).

15. Procédé de fabrication de couvercles d'appareils électriques domestiques selon la revendication 12,
**caractérisé en ce que**
la réunion entre le panneau ou plaque (1) et le châssis périphérique (12) se fait par un adhésif et en option par clippage des bords des deux pièces.

16. Procédé de fabrication de couvercles d'appareils électriques domestiques selon la revendication 12,
**caractérisé en ce que**
la réunion entre le panneau (1) et le cadre périphérique (12), se fait en surmoulant le cadre périphérique (12) sur le panneau (1).

17. Procédé de fabrication de couvercles d'appareils électriques domestiques selon la revendication 12,
**caractérisé en ce que**
la réunion du panneau (1) et du cadre périphérique (12), est faite par une soudure aux ultrasons.

18. Procédé de fabrication de couvercles pour des appareils électriques domestiques selon la revendication 1 ou 11,
**caractérisé en ce qu'**
il comprend les étapes suivantes :
- moulage ou injection du panneau supérieur (1) par expansion physique de matière plastique à faible résistance mécanique intégrant des éléments et des supports pour accrocher le panneau (1) au châssis de l'appareil électroménager,
- fixation de la feuille de mélamine (11) au panneau ou à la plaque (1) par liaison,
- usinage du panneau (1) avec la feuille de mélamine (11) fixée à celui-ci en fonction de l'appareil électromécanique domestique, de l'endroit où il doit être installé et des exigences des clients, et
- surmoulage d'un film décoratif (16) sur le panneau (1) usiné, fixé à la feuille de mélamine (11).

19. Appareil électromécanique domestique comportant un couvercle selon les revendications 1 à 10 ou 11.

20. Appareil électromécanique domestique comportant des couvercles réalisés par un procédé comme revendiqué dans les revendications 12 à 17 et 18.
